# EUROPÄISCHE PATENTANMELDUNG

(11) **EP 3 623 148 A1**
(43) Veröffentlichungstag der Anmeldung: **18.03.2020**
(21) Anmeldenummer: 18194381.2
(22) Anmeldetag: 14.09.2018
(51) Int. Cl.: B32B 5/18, B32B 27/06, B32B 27/28, B32B 27/30, B32B 27/32, B32B 27/34, B32B 27/36, B32B 27/40, B32B 37/06, B32B 37/10, B32B 3/04

(54) **VERFAHREN ZUR HERSTELLUNG EINES LAMINATS, DAS ELEKTRONISCHE BAUTEILE UND/ODER FUNKTIONSEINHEITEN UMFASST**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft ein Laminat umfassend mindestens einen Schicht a) enthaltend wenigstens einen thermoplastischen und/oder duroplastischen Kunststoff, mindestens eine Schicht b), enthaltend wenigstens ein thermoplastisches Polyurethan und mindestens ein Bauteil und/oder eine Funktionseinheit (A), das auf der mindestens einen Schicht a) positioniert ist, und wobei das wenigstens eine thermoplastische Polyurethan der Schicht b) zumindest bereichsweise als Schaumschicht ausgebildet ist. Weiterhin betrifft die Erfindung ein Verfahren zur Herstellung eines solchen Laminats und die Verwendung des Laminats zur Herstellung von Sicherheitsdokumenten, vorzugsweise Identifikationsdokumenten, Chipkarten Smartphones, Tablets, Displays für Smartphones und/oder Displays für Tablets.

## Beschreibung

Die vorliegende Erfindung betrifft ein Laminat umfassend mindestens einen Schicht a) enthaltend wenigstens einen thermoplastischen und/oder duroplastischen Kunststoff, mindestens eine Schicht b), enthaltend wenigstens ein thermoplastisches Polyurethan und mindestens ein Bauteil und/oder eine Funktionseinheit (A), das auf der mindestens einen Schicht a) positioniert ist, und wobei das wenigstens eine thermoplastische Polyurethan der Schicht b) zumindest bereichsweise als Schaumschicht ausgebildet ist. Weiterhin betrifft die Erfindung ein Verfahren zur Herstellung eines solchen Laminats und die Verwendung des Laminats zur Herstellung von Sicherheitsdokumenten, vorzugsweise Identifikationsdokumenten und Chipkarten.

Der Einbau von elektronischen Bauteilen jeglicher Art in flache und flächige Gebilde ist weit verbreitet und es ist zu erwarten, dass es zukünftig immer wichtiger wird, sensible elektronische Bauteile in besonders dünne flächige Gebilde einzubauen. So können solche elektronische Bauteile in Etiketten, Mobiltelefonen, Smartwatches oder in Chipkarten enthalten sein. Insbesondere sind Chipkarten, auch "Smart-Cards", zu nennen. Solche Karten enthalten in der Regel eine elektronische Platine welche mit sensiblen elektronischen Bauteilen bestückt ist. Diese meist sensiblen elektronischen Bauteile müssen ausreichend geschützt werden, damit diese im täglichen Gebrauch nicht beschädigt werden. Mit abnehmender Dicke der elektronischen Bauteile für verschiedene Anwendungen werden heute übliche Montagetechnologien, wie Verschrauben, Klipsen von Front- und Rückteil des Gehäuses, zunehmend komplex und teuer in der Fertigung. Das Laminationsverfahren, welches heute vorwiegend in der Fertigung von Smart-Cards und Sicherheitsdokumenten eingesetzt wird, könnte zukünftig auch für die Einbettung von elektronischen Bauteilen in andere elektronische Geräte, zum Einsatz kommen. Solche anderen elektronischen Geräte können Smartphones, Displays, Navigationsgeräte, Smart-Watches, Spielkonsolen und andere Gegenstände sein.

Ein übliches Fertigungsverfahren zum Einbetten und Schutz sensibler elektronischer Komponenten ist das Eingießen in Polyurethan oder in Epoxidharze. Die Härte, Dicke und Farbe des Systems kann dabei beliebig eingestellt werden. Nachteilig ist jedoch, dass insbesondere bei dünnen Schichten unter 1 mm, die Gleichmäßigkeit der Schichtdicke und die Oberflächenbeschaffenheit sehr aufwändig oder nicht kontrollierbar sind.

WO-A 2006/101493 beschreibt ein aufwändiges Verfahren für das Einbetten elektronischer Komponenten in dünnen Schichten von Smart-Cards. Hier werden die außenliegenden Folien einer Smartcard in einem entsprechenden Formteil platziert, die elektronischen Bauteile zwischen die Folien platziert, die Form verschlossen und anschließend wird ein Harzsystem zwischen die Folien gespritzt. Diese Technologie ist aufwändig, kompliziert und teuer, außerdem bedarf es komplett neuer Fertigungsanlagen um solche Karten herzustellen. Nachteilig bei diesem Verfahren ist, dass das übliche Laminier-Verfahren für die Kartenherstellung hier nicht eingesetzt wird. Daher ist die kostengünstige Herstellung von großen Stückzahlen mit diesem Verfahren nur schwer möglich.

Ein weiteres Verfahren für die Herstellung von Ausweiskarten ist das Spritzgießverfahren, welches beispielsweise in WO-A 98/52731 offenbart wird. Hiermit kann im Vergleich zum drucklosen Eingießen, die Schichtdicke und die Oberflächenbeschaffenheit definiert und eingehalten werden. Der Nachteil ist hierbei der hohe Druck und die Temperatur mit welcher der flüssige Kunststoff über die elektronischen Komponenten fließt. Das macht dieses Verfahren für die Einbettung elektronischer Bauteile ungeeignet. In DE-A 19921678 wird eine Kombination aus Spritzgießverfahren mit nachträglicher mechanischen Bearbeitung der Karten offenbart.

Ein weiteres Verfahren zur Herstellung von Ausweiskarten ist das Spritzgießen dünner Gehäuseteile, welche Vertiefungen enthalten, die der Struktur der einzubettenden elektronischen Bauteile entspricht und wird in DE-A 102007016779 und WO-A 2016/139114 offenbart. Die elektronischen Bauteile können dann in diese Vertiefungen eingesetzt werden. Bei der Herstellung von Karten, die elektronische Bauteile umfassen, werden üblicherweise vor dem Laminieren der einzelnen Schichten, entsprechende Öffnungen in die einzelnen Folienschichten gestanzt, in welchen die elektronischen Bauteile Platz finden und beim Laminieren nicht zerstört werden. Dies wird in DE 43 43 206 A1 offenbart.

Nachteilig bei den vorstehend beschriebenen Verfahren ist ein zusätzlicher Montageschritt zur Bereitstellung einer geeigneten Öffnung, damit die elektronischen Komponenten in den Schichtverbund oder Laminat eingebracht werden können. Sofern kein Flüssigklebstoff vorgegossen wird, gibt es keinen vollflächigen Verbund der elektronischen Komponenten mit den einzelnen Schichten und damit eine reduzierte Schutzfunktion der elektronischen Komponenten.

WO-A 2012/084859 offenbart die Einbettung von dünnen flächigen elektronischen Bauteilen in einen thermoplastischen Schaum, wobei eine Barriere-Folie die Schaumschicht und das elektronische Bauteil umschließt. Diese Barriere-Folie ist bereichsweise über eine Schweißnaht mit der Schaumschicht verbunden. Die Schweißnaht zeichnet sich durch eine hohe Dichtigkeit und besondere mechanische Stabilität aus. Die Schweißnaht wird durch einen Druck ≥ 50 bis ≤ 150 bar bei einer Temperatur von ≥ 100 bis ≤ 200 °C erhalten.

Die Aufgabe der vorliegenden Erfindung bestand darin, ein Laminat bereitzustellen, das ein Bauteil und/oder eine Funktionseinheit enthält, wobei die Funktionsfähigkeit dieses Bauteils und/oder der Funktionseinheit bei der Herstellung des Laminats nicht beeinträchtigt oder gar zerstört wird. Weiterhin war es Aufgabe der vorliegenden Erfindung ein Verfahren zur Herstellung solcher Laminate bereit zu stellen.

Überraschend wurde gefunden, dass ein Laminat umfassend
- mindestens eine Schicht a) enthaltend wenigstens einen thermoplastischen und/oder duroplastischen Kunststoff, vorzugsweise einen thermoplastischen Kunststoff,
- mindestens eine Schicht b) enthaltend wenigstens ein thermoplastisches Polyurethan, wobei mindestens ein Bauteil und/oder eine Funktionseinheit (A) auf der mindestens einen Schicht a) positioniert ist, und wobei das wenigstens eine thermoplastische Polyurethan der Schicht b) zumindest bereichsweise als Schaumschicht ausgebildet ist, diese Aufgabe löst.

Das erfindungsgemäße Laminat zeichnet sich dadurch aus, dass das eingebettete Bauteil und/oder Funktionseinheit (A) bei dem Laminiervorgang weitestgehend gegen Verschiebungen und somit vor Beschädigung geschützt ist. Außerdem erfolgt eine einfache Einbettung des Bauteils und/oder der Funktionseinheit (A) in das Laminat, so dass diese Laminate auch in großer Stückzahl hergestellt werden können. Weiterhin zeichnet sich das erfindungsgemäße Laminat durch eine ebene, glatte Oberfläche aus.

Unter Laminat werden im Rahmen dieser Erfindung mindestens zwei übereinanderliegende Schichten, bevorzugt Kunststoffschichten, besonders bevorzugt thermoplastische und/oder duroplastische Kunststoffschichten, ganz besonders bevorzugt thermoplastische Kunststoffschichten verstanden. Insbesondere können diese Schichten in Form von Kunststofffolien, bevorzugt in Form von thermoplastischen und/oder duroplastischen Kunststofffolien, besonders bevorzugt thermoplastischen Kunststofffolien, bereitgestellt werden. Diese Schichten können unter Einwirkung von Druck und Temperatur innig verbunden werden. Üblicherweise können Temperaturen von ≥ 80°C bis ≤ 220 °C, vorzugsweise von ≥100°C bis ≤ 200°C, ganz besonders bevorzugt von ≥ 110°C bis ≤ 190°C und ein Druck von ≥ 2 N/cm² bis ≤ 400 N/cm² vorzugsweise von ≥ 5 N/cm² bis ≤ 350 N/cm², ganz besonders bevorzugt von ≥ 10 N/cm² bis ≤ 300 N/cm² beim Laminervorgang eingesetzt werden.

Vorzugsweise ist das mindestens eine Bauteil und/oder Funktionseinheit (A) zumindest bereichsweise von der mindestens einen Schicht b) umgeben oder vollständig von der mindestens einen Schicht b) umhüllt, vorzugsweise vollständig von der mindestens einen Schicht b) umhüllt.

Umhüllt bedeutet, dass das Bauteil und/oder Funktionseinheit (A) vollständig von der Schicht b) abgedeckt und/oder umgeben ist.

Es können beliebig viele Bauteile und/oder Funktionseinheiten (A) im Laminat enthalten sein. Weiterhin ist denkbar, dass Sensoren, Chipkarten, Datenspeichermedien, Batterien, Beleuchtungseinheiten und/oder oder auch miteinander verbundene Bauteile und/oder Funktionseinheiten (A) eingesetzt werden können. Bauteil und/oder Funktionseinheit (A) können Dicken im Bereich von 20 µm bis 1500 µm aufweisen.

Die mindestens eine Schicht a) enthält wenigstens einen thermoplastischen und/oder duroplastischen Kunststoff, vorzugsweise einen thermoplastischen Kunststoff. Bei dem thermoplastischen Kunststoff der mindestens einen Schicht a) kann es sich bevorzugt um wenigstens einen Kunststoff ausgewählt aus Polymerisaten von ethylenisch ungesättigten Monomeren und/oder Polykondensaten von bifunktionellen reaktiven Verbindungen und/oder Polyadditionaprodukten von bifunktionellen reaktiven Verbindungen, oder deren Mischungen handeln. Für bestimmte Anwendungen kann es vorteilhaft und demnach bevorzugt sein, wenigstens einen transparenten thermoplastischen Kunststoff einzusetzen. Bei dem duroplastischen Kunststoff kann es sich um wenigstens einen Kunststoff ausgewählt aus Polymerisaten von ethylenisch ungesättigten Monomeren und/oder Polykondensaten von trifunktionellen reaktiven Verbindungen und/oder Polyadditionaprodukten von trifunktionellen reaktiven Verbindungen, oder deren Mischungen handeln. Dies sind beispielsweise härtbare Formmassen, Formadhehyd- Pressmassen, wie beispielsweise Phenoplasten, Phenol-(PF)-, Kresol-(CF)-, Resorcin-(RF)-, Xylenol-(XF)- Formaldehyd-Harze, Aminoplaste wie beispielsweise Harnstoff-(UF)-, Melamin-(MF)-, Furan-(FF)-Formaldehydharze und weitere Massen wie Prepregs, ungesättigte Polyesterharze (UP), Vinylesterharze (VE), Phenacrylatharze (PHA), Epoxydharze (EP), Diallylpthalatharze und/oder Polydiallylphthalatharze (PDAP), Silikonharz (Si).

Besonders geeignete thermoplastische Kunststoffe der Schicht a) sind Polycarbonate oder Copolycarbonate auf Basis von Diphenolen, Poly- oder Copolyacrylate und Poly- oder Copolymethacrylate wie beispielhaft und vorzugsweise Polymethylmethacrylat (PMMA), Poly- oder Copolymere mit Styrol wie beispielhaft und vorzugsweise Polystyrol (PS) Acrylnitril-Butadien-Styrol (ABS) oder Polystyrolacrylnitril (SAN), thermoplastische Polyurethane, sowie Polyolefine, wie beispielhaft und vorzugsweise Polypropylentypen oder Polyolefine auf der Basis von cyclischen Olefinen (z.B. TOPAS™), Poly- oder Copolykondensate einer aromatischen Dicarbonsäure und aliphatischen, cycloalophatischen und/oder araliphatischen Diolen mit 2 bis 16 Kohlenstoffatomen, wie beispielhaft und vorzugsweise Poly- oder Copolykondensate der Terephthalsäure, besonders bevorzugt Poly- oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT), vorzugsweise Poly- oder Copolykondensate der Naphthalindicarbonsäure, besonders bevorzugt Polyethylenglykolnaphthalat (PEN), Poly- oder Copolykondensat(e) wenigstens einer Cycloalkyldicarbonsäure, wie beispielhaft und vorzugsweise Polycyclohexandimethanolcyclohexandicarbonsäure (PCCD), Polysulfone (PSU), Polyvinylhalogenide, wie beispielhaft und vorzugsweise Polyvinylchlorid (PVC), oder deren Mischungen oder Blends aus mindestens zwei der vorangehend genannten, besonders bevorzugt ein oder mehrere Polycarbonate oder Copolycarbonate auf Basis von Diphenolen, Poly- oder Copoly(meth)acrylate, Poly- oder Copolykondensateder Terephthalsäure oder deren Mischungen oder Blends aus mindestens zwei der vorangehend genannten.

Besonders bevorzugte thermoplastische Kunststoffe sind ein oder mehrere Polycarbonat(e) oder Copolycarbonat(e) auf Basis von Diphenolen oder Blends enthaltend wenigstens ein Polycarbonat oder Copolycarbonat. Ganz besonders bevorzugt sind Blends enthaltend wenigstens ein Polycarbonat oder Copolycarbonat und wenigstens ein Poly- oder Copolykondensat der Terephthalsäure, der Naphthalindicarbonsäure oder einer Cycloalkyldicarbonsäure, bevorzugt der Cyclohexandicarbonsäure Ganz besonders bevorzugt sind Polycarbonate oder Copolycarbonate, insbesondere mit mittleren Molekulargewichten Mw von 500 bis 100 000, bevorzugt von 10 000 bis 80 000, besonders bevorzugt von 15 000 bis 40 000, oder deren Blends mit wenigstens einem Poly- oder Copolykondensat der Terephthalsäure mit mittleren Molekulargewichten Mw von 10.000 bis 200.000, bevorzugt von 21.000 bis 120.000.

Als Poly- oder Copolykondensate der Terephthalsäure eignen sich in bevorzugten Ausführungsformen der Erfindung Polyalkylenterephthalate. Geeignete Polyalkylenterephthalate sind beispielsweise Reaktionsprodukte aus aromatischen Dicarbonsäuren oder ihren reaktionsfähigen Derivaten (z. B. Dimethylestern oder Anhydriden) und aliphatischen, cylcoaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80 Mol-%, vorzugsweise 90 Mol-% Terephthalsäurereste, bezogen auf die Dicarbonsäurekomponente, und mindestens 80 Mol-%, vorzugsweise mindestens 90 Mol-% Ethylenglykol- und/oder Butandiol-1,4- und/oder 1,4-Cyclohexandimethanol-Reste, bezogen auf die Diolkomponente.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie beispielsweise Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Butandiol-1,4-glykol-Resten bis zu 80 Mol-% anderer aliphatischer Diole mit 3 bis 12 C-Atomen oder cycloaliphatischer Diole mit 6 bis 21 C-Atomen enthalten, z. B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und 2-Ethylhexandiol-1,6, 2,2-Diethylpropandiol-1,3, Hexandiol-2,5, 1,4-Di-([beta]-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-[beta]-hydroxyethoxyphenyl)-propan und 2,2-Bis-(4-hydroxypropoxyphenyl)-propan (vgl. DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z. B. in der DE-OS 19 00 270 und der US-PS 3 692 744 beschrieben sind, verzweigt werden. Beispiele bevorzugter Verzweigungsmittel sind Trimesinsäure, Trimellitsäure, Trimethylolethan und -propan und Pentaerythrit.

Vorzugsweise wird nicht mehr als 1 Mol-% des Verzweigungsmittels, bezogen auf die Säurekomponente, verwendet.

Besonders bevorzugt sind Polyalkylenterephthalate, die allein aus Terephthalsäure und deren reaktionsfähigen Derivaten (z. B. deren Dialkylestern) und Ethylenglykol und/oder Butandiol-1,4 und/oder 1,4-Cyclohexandimethanol-Reste hergestellt worden sind, und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die als Komponente vorzugsweise verwendeten Polyalkylenterephthalate besitzen bevorzugt eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

In besonders bevorzugten Ausführungsformen der Erfindung handelt es sich bei dem Blend von wenigstens einem Polycarbonat oder Copolycarbonat mit wenigstens einem Poly- oder Copolykondensat der Terephthalsäure um einen Blend aus wenigstens einem Polycarbonat oder Copolycarbonat mit Poly- oder Copolybutylenterephthalat oder glycol-modifiziertem Poly- oder Copolycyclohexandimethylenterephthalat. Bei einem solchen Blend aus Polycarbonat oder Copolycarbonat mit Poly- oder Copolybutylenterephthalat oder glycol-modifiziertem Poly- oder Copolycyclohexandimethylenterephthalat kann es sich bevorzugt um einen solchen mit 1 bis 90 Gew.-% Polycarbonat oder Copolycarbonat und 99 bis 10 Gew.-% Poly- oder Copolybutylenterephthalat oder glycol-modifiziertem Poly- oder Copolycyclohexandimethylenterephthalat, vorzugsweise mit 1 bis 90 Gew.-% Polycarbonat und 99 bis 10 Gew.-% Polybutylenterephthalat oder glycol-modifiziertem Polycyclohexandimethylenterephthalat handeln, wobei sich die Anteile zu 100 Gew.-% addieren. Besonders bevorzugt kann es sich bei einem solchen Blend aus Polycarbonat oder Copolycarbonat mit Poly- oder Copolybutylenterephthalat oder glycol-modifiziertes Poly- oder Copolycyclohexandimethylenterephthalat um einen solchen mit 20 bis 85 Gew.-% Polycarbonat oder Copolycarbonat und 80 bis 15 Gew.-% Poly- oder Copolybutylenterephthalat oder glycol-modifiziertem Poly- oder Copolycyclohexandimethylenterephthalat, vorzugsweise mit 20 bis 85 Gew.-% Polycarbonat und 80 bis 15 Gew.-% Polybutylenterephthalat oder glycol-modifiziertem Polycyclohexandimethylenterephthalat handeln, wobei sich die Anteile zu 100 Gew.-% addieren. Ganz besonders bevorzugt kann es sich bei einem solchen Blend aus Polycarbonat oder Copolycarbonat mit Poly- oder Copolybutylenterephthalat oder glycol-modifiziertem Poly- oder Copolycyclohexandimethylenterephthalat um einen solchen mit 35 bis 80 Gew.-% Polycarbonat oder Copolycarbonat und 65 bis 20 Gew.-% Poly- oder Copolybutylenterephthalat oder glycol-modifiziertem Poly- oder Copolycyclohexandimethylenterephthalat, vorzugsweise mit 35 bis 80 Gew.-% Polycarbonat und 65 bis 20 Gew.-% Polybutylenterephthalat oder glycol-modifiziertem Polycyclohexandimethylenterephthalat handeln, wobei sich die Anteile zu 100 Gew.-% addieren. In ganz besonders bevorzugten Ausführungsformen kann es sich um Blends aus Polycarbonat und glycol-modifiziertem Polycyclohexandimethylenterephthalat in den vorangehend genannten Zusammensetzungen handeln.

Als Polycarbonate oder Copolycarbonate eignen sich in bevorzugten Ausführungsformen besonders aromatische Polycarbonate oder Copolycarbonate.

Die Polycarbonate oder Copolycarbonate können in bekannter Weise linear oder verzweigt sein.

Die Herstellung dieser Polycarbonate kann in bekannter Weise aus Diphenolen, Kohlensäurederivaten, gegebenenfalls Kettenabbrechern und gegebenenfalls Verzweigern erfolgen. Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P. R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Geeignete Diphenole können beispielsweise Dihydroxyarylverbindungen der allgemeinen Formel (I) sein,

HO-Z-OH (I)

worin Z ein aromatischer Rest mit 6 bis 34 C-Atomen ist, der einen oder mehrere gegebenenfalls substituierte aromatische Kerne und aliphatische oder cycloaliphatische Reste bzw. Alkylaryle oder Heteroatome als Brückenglieder enthalten kann.

Beispiele für geeignete Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole, sowie deren kemalkylierte und kernhalogenierte Verbindungen.

Diese und weitere geeignete andere Dihydroxyarylverbindungen sind z.B. in DE-A 3 832 396, FR-A 1 561 518, in H. Schnell, Chemistry and Physics of Polycarbonates, Interscience Publishers, New York 1964, S. 28 ff.; S.102 ff. und in D.G. Legrand, J.T. Bendler, Handbook of Polycarbonate Science and Technology, Marcel Dekker New York 2000, S. 72 ff. beschrieben.

Bevorzugte Dihydroxyarylverbindungen sind beispielsweise Resorcin, 4,4'-Dihydroxydiphenyl, Bis-(4-hydroxyphenyl)-methan, Bis-(3,5-dimethyl-4-hydroxyphenyl)-methan, Bis-(4-hydroxyphenyl)-diphenyl-methan, 1,1-Bis-(4-hydroxyphenyl)-1-phenyl-ethan, 1,1-Bis-(4-hydroxyphenyl)-1-(1-naphthyl)-ethan, 1,1-Bis-(4-hydroxyphenyl)-1-(2-naphthyl)-ethan, 2,2-Bis-(4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-1-phenyl-propan, 2,2-Bis-(4-hydroxyphenyl)-hexafluor-propan, 2,4-Bis-(4-hydroxyphenyl)-2-methyl-butan, 2,4-Bis-(3,5-dimethyl-4-hydroxyphenyl)-2-methylbutan, 1,1-Bis-(4-hydroxyphenyl)-cyclohexan, 1,1-Bis-(3,5-dimethyl-4-hydroxyphenyl)-cylohexan, 1,1-Bis-(4-hydroxyphenyl)-4-methyl-cylohexan, 1,3-Bis-[2-(4-hydroxyphenyl)-2-propyl]-benzol, 1,1'- Bis-(4-hydroxyphenyl)-3-diisopropyl-benzol, 1,1'-Bis-(4-hydroxyphenyl)-4-diisopropyl-benzol, 1,3-Bis-[2-(3,5-dimethyl-4-hydroxyphenyl)-2-propyl]-benzol, Bis-(4-hydroxyphenyl)-ether, Bis-(4-hydroxyphenyl)-sulfid, Bis-(4-hydroxyphenyl)-sulfon, Bis-(3,5-dimethyl-4-hydroxyphenyl)-sulfon und 2,2',3,3'-Tetrahydro-3,3,3',3'-tetramethyl-1,1'-spirobi-[1H-inden]-5,5'-diol oder Dihydroxydiphenylcycloalkane der Formel (Ia) 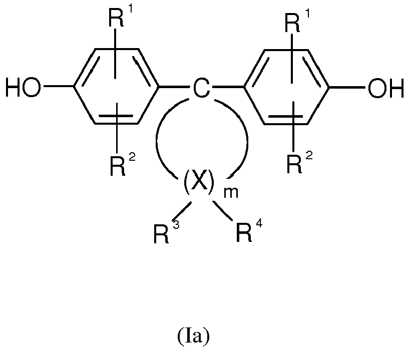 worin
R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-Ci-C₄-Alkyl, insbesondere Benzyl,
m eine ganze Zahl von 4 bis 7, bevorzugt 4 oder 5,
R³ und R⁴ für jedes X individuell wählbar, unabhängig voneinander Wasserstoff oder C₁-C₆-Alkyl und
X Kohlenstoff bedeuten,
mit der Maßgabe, dass an mindestens einem Atom X, R³ und R⁴ gleichzeitig Alkyl bedeuten. Bevorzugt sind in der Formel (Ia) an einem oder zwei Atom(en) X, insbesondere nur an einem Atom X R³ und R⁴ gleichzeitig Alkyl.

Bevorzugter Alkylrest für die Reste R³ und R⁴ in Formel (Ia) ist Methyl. Die X-Atome in alpha - Stellung zu dem Diphenylsubstituierten C-Atom (C-1) sind bevorzugt nicht dialkylsubstituiert, dagegen ist die Alkyldisubstitution in beta-Stellung zu C-1 bevorzugt.

Besonders bevorzugte Dihydroxydiphenylcycloalkane der Formenl (Ia) sind solche mit 5 und 6 Ring-C-Atomen X im cycloaliphatischen Rest (m = 4 oder 5 in Formel (Ia)), beispielsweise die Diphenole der Formeln (Ia-1) bis (Ia-3),

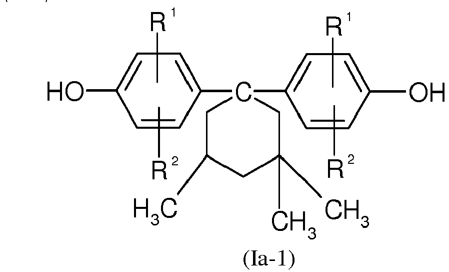

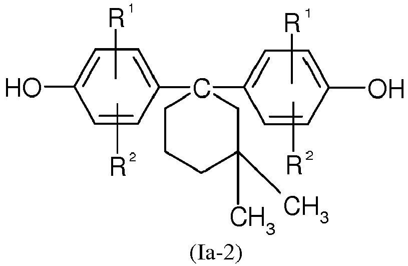

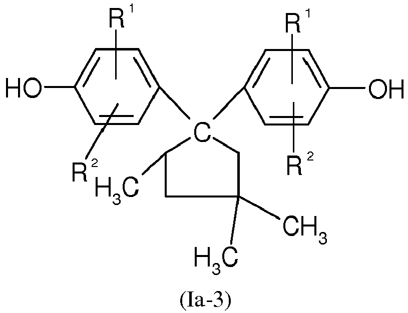

Ein ganz besonders bevorzugtes Dihydroxydiphenylcycloalkan der Formenl (Ia) ist 1,1-Bis-(4-hydroxyphenyl)-3,3,5-trimethyl-cyclohexan (Formel (Ia-1) mit R¹ und R² gleich H).

Solche Polycarbonate können gemäß der EP-A 359 953 aus Dihydroxydiphenylcycloalkanen der Formel (Ia) hergestellt werden.

Besonders bevorzugte Dihydroxyarylverbindungen sind Resorcin, 4,4'-Dihydroxydiphenyl, Bis-(4-hydroxyphenyl)-diphenyl-methan, 1,1-Bis-(4-hydroxyphenyl)-1-phenyl-ethan, Bis-(4-hydroxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan, 1,1-Bis-(3,5-dimethyl-4-hydroxyphenyl)-cyclohexan, 1,1-Bis-(4-hydroxyphenyl)-3,3,5-trimethyl-cyclohexan, 1,1'-Bis-(4-hydroxyphenyl)-3-diisopropyl-benzol und 1,1'-Bis-(4-hydroxyphenyl)-4-diisopropyl-benzol.

Ganz besonders bevorzugte Dihydroxyarylverbindungen sind 4,4'-Dihydroxydiphenyl und 2,2-Bis-(4-hydroxyphenyl)-propan.

Es können sowohl eine Dihydroxyarylverbindung unter Bildung von Homopolycarbonaten als auch verschiedene Dihydroxyarylverbindungen unter Bildung von Copolycarbonaten verwendet werden. Es können sowohl eine Dihydroxyarylverbindung der Formel (I) oder (Ia) unter Bildung von Homopolycarbonaten als auch mehrere eine Dihydroxyarylverbindungen der Formel (I) und/oder (Ia) unter Bildung von Copolycarbonaten verwendet werden. Dabei können die verschiedenen Dihydroxyarylverbindungen sowohl statistisch als auch blockweise miteinander verknüpft sein. Im Falle von Copolycarbonaten aus Dihydroxyarylverbindungen der Formel (I) und (Ia), beträgt das molare Verhältnis von Dihydroxyarylverbindungen der Formel (Ia) zu den gegebenenfalls mitzuverwendenden anderen Dihydroxyarylverbindungen der Formel (I) vorzugsweise zwischen 99 Mol-% (Ia) zu 1 Mol-% (I) und 2 Mol-% (Ia) zu 98 Mol-% (I), vorzugsweise zwischen 99 Mol-% (Ia) zu 1 Mol-% (I) und 10 Mol-% (Ia) zu 90 Mol-% (I) und insbesondere zwischen 99 Mol-% (Ia) zu 1 Mol-% (I) und 30 Mol-% (Ia) zu 70 Mol-% (I).

Ein ganz besonders bevorzugtes Copolycarbonat kann unter Verwendung von 1,1-Bis-(4-hydroxyphenyl)-3,3,5-trimethyl-cyclohexan und 2,2-Bis-(4-hydroxyphenyl)-propan Dihydroxyarylverbindungen der Formel (Ia) und (I) hergestellt werden.

Geeignete Kohlensäurederivate können beispielsweise Diarylcarbonate der allgemeinen Formel (II) sein, 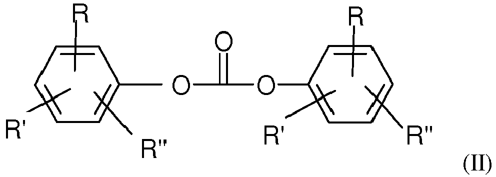 worin
R, R' und R" unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen, R weiterhin auch -COO-R'" bedeuten kann, wobei R'" für Wasserstoff, lineares oder verzweigtes C₁-C₃₄-Alkyl, C₇-C₃₄-Alkylaryl oder C₆-C₃₄-Aryl steht.

Bevorzugte Diarylcarbonate sind beispielsweise Diphenylcarbonat, Methylphenyl-phenyl-carbonate und Di-(methylphenyl)-carbonate, 4-Ethylphenyl-phenyl-carbonat, Di-(4-ethylphenyl)-carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenylphenyl-carbonat, Di-(4-iso-octylphenyl)-carbonat, 4-n-Nonylphenyl-phenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1 -phenylethyl)-phenyl-phenyl-carbonat, Di-[4-(1-methyl-1 -phenylethyl)-phenyl] -carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)-phenyl]-carbonat, Di-[4-(2-naphthyl)phenyl]-carbonat, 4-Phenoxyphenyl-phenyl-carbonat, Di-(4-phenoxyphenyl)-carbonat, 3-Pentadecylphenyl-phenyl-carbonat, Di-(3-pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsalicylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, Di-(iso-butylsalicylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Besonders bevorzugte Diarylverbindungen sind Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1 -phenylethyl)-phenyl]-carbonat und Di-(methylsalicylat)-carbonat. Ganz besonders bevorzugt ist Diphenylcarbonat.

Es können sowohl ein Diarylcarbonat als auch verschiedene Diarylcarbonate verwendet werden.

Zur Steuerung bzw. Veränderung der Endgruppen können zusätzlich beispielsweise eine oder mehrere Monohydroxyarylverbindung(en) als Kettenabbrecher eingesetzt werden, die nicht zur Herstellung des oder der verwendeten Diarylcarbonat(e) verwendet wurde(n). Dabei kann es sich um solche der allgemeinen Formel (III) handeln, 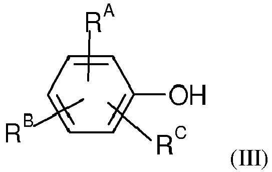 wobei
R^{A} für lineares oder verzweigtes C₁-C₃₄-Alkyl, C₇-C₃₄-Alkylaryl, C₆-C₃₄-Aryl oder für -COO-R^{D} steht, wobei R^{D} für Wasserstoff, lineares oder verzweigtes C₁-C₃₄-Alkyl, C₇-C₃₄-Alkylaryl oder C₆-C₃₄-Aryl steht, und
R^{B}, R^{C} unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen.

Solche Monohydroxyarylverbindungen sind beispielsweise 1-, 2- oder 3-Methylphenol, 2,4-Dimethylphenol 4-Ethylphenol, 4-n-Propylphenol, 4-iso-Propylphenol, 4-n-Butylphenol, 4-isoButylphenol, 4-tert-Butylphenol, 4-n-Pentylphenol, 4-n-Hexylphenol, 4-iso-Octylphenol, 4-n-Nonylphenol, 3-Pentadecylphenol, 4-Cyclohexylphenol, 4-(1-Methyl-1-phenylethyl)-phenol, 4-Phenylphenol, 4-Phenoxyphenol, 4-(1-Naphthyl)-phenol, 4-(2-Naphthyl)-phenol, 4-Tritylphenol, Methylsalicylat, Ethylsalicylat, n-Propylsalicylat, iso-Propylsalicylat, n-Butylsalicylat, iso-Butylsalicylat, tert-Butylsalicylat, Phenylsalicylat und Benzylsalicylat.

Bevorzugt sind 4-tert-Butylphenol, 4-iso-Octylphenol und 3-Pentadecylphenol.

Geeignete Verzweiger können Verbindungen mit drei und mehr funktionellen Gruppen, vorzugsweise solche mit drei oder mehr Hydroxylgruppen.

Geeignete Verbindungen mit drei oder mehr phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol und Tetra-(4-hydroxyphenyl)-methan.

Sonstige geeignete Verbindungen mit drei und mehr funktionellen Gruppen sind beispielsweise 2,4-Dihydroxybenzoesäure, Trimesinsäure(trichlorid), Cyanursäuretrichlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die mindestens eine Schicht b) enthaltend wenigstens ein thermoplastisches Polyurethan, ist zumindest bereichsweise als Schaumschicht ausgebildet.

Es ist prinzipiell möglich alle thermoplastischen Polyurethane (TPU) durch Zusatz geeigneter Treibmittel zu schäumen. Vorzugsweise werden erfindungsgemäß solche TPUs gewählt, die eine niedrige Härte aufweisen. Damit wird das Risiko einer Beschädigung der elektronischen Bauteile beim Laminieren minimiert. Die vorzugsweise thermoplastischen Polyurethane weisen eine Härte von ≥ 60 Shore A gemäß DIN ISO 7619-1 bis ≤ 60 Shore D gemäß DIN ISO 7619-1, bevorzugt von ≥ 70 Shore A gemäß DIN ISO 7619-1 bis ≤ 95 Shore A gemäß DIN ISO 7619-1, ganz besonders bevorzugt von ≥ 80 Shore A gemäß DIN ISO 7619-1 bis ≤ 95 Shore A gemäß DIN ISO 7619-1 auf.

Vorzugsweise weist die mindestens eine Schicht b) vor der Lamination eine Dichte von ≥ 0,2 bis ≤ 0,9 g/cm³, vorzugsweise von ≥ 0,3 bis ≤ 0,8 g/cm³, besonders bevorzug von ≥ 0,5 bis ≤ 0,7 g/cm³ auf. Die Poren in der mindestens einen Schicht b) weisen vor der Lamination bevorzugt Durchmesser zwischen 50 µm und 250 µm auf.

TPU sind wegen ihrer guten Elastomereigenschaften und thermoplastischen Verarbeitbarkeit von großer technischer Bedeutung. Eine Übersicht über die Herstellung, Eigenschaften und Anwendungen von TPU ist z.B. im Kunststoff Handbuch [G. Becker, D. Braun], Band 7 "Polyurethane", München, Wien, Carl Hanser Verlag, 1983, gegeben.

TPU können in Abhängigkeit der eingesetzten organischen Diisocyanate aliphatischen oder aromatischen Charakter besitzen. TPU haben üblicherweise einen Block- oder Segmentaufbau. Grundsätzlich unterscheidet man Hartsegmente und Weichsegmente. Hartsegmente werden gebildet aus den zur Reaktion eingesetzten organischen Diisocyanaten und kurzkettigen Verbindungen mit zwei bis drei Hydroxyl-, Amino-, Thiol- oder Carboxylgruppen, vorzugweise Verbindungen mit zwei Hydroxyl-, Amino-, Thiol- oder Carboxylgruppen, besonders bevorzugt Diole, mit einem mittleren Molekulargewicht von 60 bis 500 g/mol. Weichsegmente werden gebildet aus den zur Reaktion eingesetzten organischen Diisocyanaten und langkettigen Verbindungen mit zwei bis drei Hydroxyl-, Amino-, Thiol- oder Carboxylgruppen, vorzugsweise Verbindungen mit zwei Hydroxyl-, Amino-, Thiol- oder Carboxylgruppen, besonders bevorzugt Diole, mit einem mittleren Molekulargewicht von ≥ 500 und ≤ 5000.

Hartsegmente steuern die Festigkeit und die oberen Nutzungstemperaturen zu den TPU Eigenschaftsprofilen bei, Weichsegmente steuern die elastischen Eigenschaften und die Kälteflexibilität zu den Materialeigenschaften der TPU bei.

Sowohl für die Hardsegmente als auch für die Weichsegmente können als organische Diisocyanate aromatische, aliphatische, araliphatische, heterocyclische und cycloaliphatische Diisocyanate oder Gemische dieser Diisocyanate verwendet werden (vgl. HOUBEN-WEYL "Methoden der organischen Chemie", Band E20 "Makromolekulare Stoffe", Georg Thieme Verlag, Stuttgart, New York 1987, S. 1587-1593 oder Justus Liebigs Annalen der Chemie, 562, Seiten 75 bis 136).

Im Einzelnen seien beispielhaft genannt: aliphatische Diisocyanate, wie Hexamethylendiisocyanat, cycloaliphatische Diisocyanate, wie Isophorondiisocyanat, 1,4-Cyclohexan-diisocyanat, 1-Methyl-2,4-cyclohexan-diisocyanat und 1-Methyl-2,6-cyclohexan-diisocyanat sowie die entsprechenden Isomerengemische, 4,4'-Dicyclohexylmethan-diisocyanat, 2,4'-Dicyclohexylmethan-diisocyanat und 2,2'-Dicyclohexylmethan-diisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Diisocyanatodiphenyl-ethan-(1,2) und 1,5-Naphthylendiisocyanat. Vorzugsweise verwendet werden 1,6-Hexamethylendiisocyanat, Isophorondiisocyanat, Dicyclohexylmethan-4,4'-diisocyanat, Diphenylmethandiisocyanat-Isomerengemische mit einem 4,4'-Diphenylmethandiisocyanatgehalt von > 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4"-triisocyanat oder Polyphenyl-polymethylen-polyisocyanaten. Besonders bevorzugte organische Diisocyanate sind beispielsweise 4,4'-Diphenylmethandiisocyanat, hydriertes 4,4'-Diphenylmethandiisocyanat, 2,4-Toluoldiisocyanat und Hexamethylendiisocyanat.

Die bevorzugten kurzkettigen Diole mit einem Molekulargewicht von 60 bis 500 g/mol sind vorzugsweise aliphatische Diole mit 2 bis 14 Kohlenstoffatomen, beispielsweise Ethandiol, 1,2-Propandiol, 1,3-Propandiol, 1,4-Butandiol, 2,3-Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(β-hydroxyethyl)-hydrochinon, ethoxylierte Bisphenole, z.B. 1,4-Di(β-hydroxyethyl)-bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4-toluylendiamin oder 3,5-Diethyl-2,6-toluylendiamin oder primäre mono-, di-, tri- oder tetraalkylsubstituierte 4,4'-Diaminodiphenylmethane. Besonders bevorzugt sind Ethandiol, 1,2-Propandiol, 1,3-Propandiol, 1,4-Butandiol, 1,6-Hexandiol, Ethylenglycol, Diethylenglycol, 1,4-Di(β-hydroxyethyl)-hydrochinon oder 1,4-Di(β-hydroxyethyl)-bisphenol A verwendet. Es können auch Gemische der oben genannten Verbindungen eingesetzt werden. Daneben können auch kleinere Mengen an Triolen zugesetzt werden.

Die langkettigen Verbindungen mit zwei bis drei Hydroxyl-, Amino-, Thiol- oder Carboxylgruppen, vorzugsweise Verbindungen mit zwei Hydroxyl-, Amino-, Thiol- oder Carboxylgruppen, besonders bevorzugt Diole, mit einem zahlenmittleren Molekulargewicht von ≥ 500 und ≤ 5000 können in zwei Hauptgruppen eingeteilt werden: Polyetherdiole und Polyesterdiole. Die Polyetherdiole basieren beispielsweise auf Polytetrahydrofuran, Polyethylenoxid sowie Polypropylenoxid und deren Gemische. Die Polyesterdiole basieren typischerweise auf Adipaten, wie z.B. 1,4-Butandioladipat und 1,6-Hexandioladipat und Caprolacton. Cokondensate sind ebenfalls möglich.

Bei der Herstellung der TPU können nach dem Stand der Technik bekannte und übliche Katalysatoren eingesetzt werden. Dies können tertiären Amine, wie z.B. Triethylamin, Dimethylcyclohexylamin, N-Methylmorpholin, N,N'-Dimethylpiperazin, 2-(Dimethylamino-ethoxy)ethanol, Diaza-bicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den TPU kann in der Regel etwa 0 bis 5 Gew.-%, bevorzugt 0 bis 2 Gew.-%, bezogen auf die Gesamtmenge an TPU betragen.

Weiterhin können die TPU Hilfs- und Zusatzstoffe bis zu maximal 20 Gew.-%, bezogen auf die Gesamtmenge an TPU, enthalten. Typische Hilfs- und Zusatzstoffe sind Pigmente, Farbstoffe, Flammschutzmittel, Stabilisatoren gegen Alterungs- und Witterungseinflüsse, Weichmacher, Gleit- und Entformungsmittel, fungistatisch und bakteriostatisch wirkende Substanzen sowie Füllstoffe und deren Mischungen.

Beispiele für weitere Zusatzstoffe sind Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe, beispielsweise Polycarbonate, sowie Weichmacher und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R.Gächter u. H.Müller (Hanser Verlag München 1990) oder der DE-A 29 01 774 zu entnehmen.

Zur Herstellung der erfindungsgemäßen Schaumschicht b) wird dem TPU ein Treibmittel zugesetzt, vorzugsweise ein Treibmittel, welches beim Erhitzen CO₂ abspaltet und somit die Schaumschicht ausbildet. Geeignete Treibmittel sind Hydrogencarbonate, wie beispielsweise Calciumhydrogencarbonat, Kaliumhydrogencarbonat und/oder Natriumhydrogencarbonat, und/oder Citrate, wie beispielsweise Natriumcitrat, Kaliumcitrat, Calciumcitrat, Magnesiumcitrat.

Zur Herstellung der Schaumschicht b) wird üblicherweise das granulatförmige TPU als Masterbatch, welches ein Treibmittel enthält, vermischt. Dieses Gemisch wird anschließend in einem Extruder komprimiert, aufgeschmolzen und homogenisiert. Die Temperaturen der Schmelze im Extruder liegen oberhalb der Zersetzungstemperatur des Treibmittels und es wird CO₂ abgespalten, welches sich zum Großteil in der Schmelze unter dem vorhandenen Druck löst. Die Schmelze wird durch ein Extrusionswerkzeug, welches auch als Düse bezeichnet wird, geführt. Durch den Druckabfall beim Austritt aus der Düse wird das in der Schmelze gelöste CO₂ frei und erzeugt fein verteilte Bläschen. Diese geschäumte Schmelzefahne kann mittels weiterer Bearbeitung im Flachfolien- oder Blasfolienverfahren zu einer geschäumten Folie verarbeitet werden.

In beiden Verfahren können weitere Schichten umfassend wenigstens einen thermoplastischen Kunststoff, vorzugsweise TPU, mit oder ohne Treibmittel coextrudiert werden.

Geeignete thermoplastische Polyurethane sind beispielsweise auf dem Markt unter den Handelsnamen Desmopan™, Elastollan™, Pellethane™, Estane™, Morthane™ oder Texin™ erhältlich.

In einer Ausführungsform der Erfindung umfasst das Laminat eine oder mehrere weitere Schichten c) umfassend wenigstens ein TPU mit einer Gesamtschichtdicke der einen oder mehreren weiteren Schichten c) von ≥ 5 µm bis ≤ 150 µm, vorzugsweise von ≥ 10 µm bis ≤ 120 µm, besonders bevorzugt von ≥ 15 µm bis ≤ 110 µm und wobei die eine oder mehreren weiteren Schichten c) so angeordnet sind, dass die Schichten die unmittelbare Reihenfolge a) c) b) oder a) b) c) bilden. Besonders bevorzugt wird die Schicht c) in Form einer Folie eingesetzt.

In einer bevorzugten Ausführungsform der Erfindung ist eine oder mehrere weitere Schichten c) umfassend wenigstens ein TPU mit einer Gesamtschichtdicke der einen oder mehreren weiteren Schichten c) von ≥ 5 µm bis ≤ 150 µm, vorzugsweise von ≥ 10 µm bis ≤ 120 µm, besonders bevorzugt von ≥ 15 µm bis ≤ 110 µm in der Weise angeordnet, dass das mindestens eine Bauteil und/oder Funktionseinheit (A) von der einen oder mehreren weiteren Schichten c) zumindest teilweise überdeckt wird, also die Schichten die unmittelbare Reihenfolge a) c) b) bilden.

Zur Vermeidung von Wiederholungen gelten die vorstehend beschriebenen TPU, auch für die eine oder mehreren weiteren Schichten c) mit den vorstehend genannten Ausführungsformen und Vorzugsbereichen.

In einer weiteren Ausführungsform umfasst das Laminat eine oder mehrere weitere Schichten d) umfassend wenigstens ein TPU mit einer Gesamtschichtdicke der einen oder mehreren Schichten d) von ≥ 5 µm bis ≤ 150 µm, vorzugsweise von ≥ 10 µm bis ≤ 120 µm, besonders bevorzugt von ≥ 15 µm bis ≤ 110 µm, und wobei diese eine oder mehrere weiteren Schichten d) in einer Weise im Laminat angeordnet sind, dass zwischen der mindestens einen weiteren Schicht d) und der mindestens einen weiteren Schicht c) immer die Schicht b) liegt, vorzugsweise sind die Schichten in der unmittelbaren Reihenfolge a) c) b) d) oder a) d) b) c) angeordnet.

In einer anderen Ausführungsform der Erfindung können die eine oder mehreren Schichten d) in Form einer ein- oder mehrschichtigen Folie eingesetzt werden.

In einer weiteren Ausführungsform weist das TPU der einen oder mehreren weiteren Schichten c) und/oder der einen oder mehreren weiteren Schichten d) jeweils eine Härte von ≥ 60 Shore A gemäß DIN ISO 7619-1 bis ≤ 60 Shore D gemäß DIN ISO 7619-1, bevorzugt von ≥ 70 Shore A gemäß DIN ISO 7619-1 bis ≤ 95 Shore A gemäß DIN ISO 7619-1, ganz besonders bevorzugt von ≥ 80 Shore A gemäß DIN ISO 7619-1 bis ≤ 95 Shore A gemäß DIN ISO 7619-1 auf.

Das wenigstens eine TPU der Schicht c) kann gleich oder verschieden von dem wenigstens einen TPU der Schicht d) sein, vorzugsweise ist das wenigstens eine TPU der Schicht c) und der Schicht d) gleich.

Zur Vermeidung von Wiederholungen gelten die vorstehend beschriebenen thermoplastischen Kunststoff, insbesondere die vorstehend beschriebenen TPU, auch für die eine oder mehreren Schichten d) mit den vorstehend genannten Ausführungsformen und Vorzugsbereichen.

In einer Ausführungsform der Erfindung ist die mindestens eine Schicht b) und die eine oder mehreren Schichten c) in Form einer mehrschichtigen Folie b) c) im Laminat enthalten, vorzugsweise einer mehrschichtigen co-extrudierten Folie b) c).

In einer anderen Ausführungsform ist die mindestens eine Schicht b), die eine oder mehreren Schichten c) und die eine oder mehreren Schichten d) in Form einer mehrschichtigen Folie c) b) d) im Laminat enthalten, wobei die eine oder mehreren Schichten c) und d) die mindestens eine Schicht b) umschließen, vorzugsweise einer mehrschichtigen co-extrudierten Folie c) b) d) .

Die erfindungsgemäß verwendbaren thermoplastischen Polyurethane der einen oder mehreren Schichten c) und/oder der einen oder mehreren Schichten d) können kontinuierlich im sogenannten Extruderverfahren, z.B. in einem Mehrwellenextruder, oder im sogenannten Bandverfahren hergestellt werden. Die Dosierung der vorstehend beschriebenen TPU gegebenenfalls mit den vorstehend beschrieben Hilfs- und Zusatzstoffen kann gleichzeitig, d.h. im one-shot-Verfahren, oder nacheinander, d.h. nach einem Prepolymer-Verfahren, erfolgen. Besonders bevorzugt ist das Prepolymer-Verfahren. Dabei kann das Prepolymer sowohl batchweise vorgelegt, als auch kontinuierlich in einem Teil des Extruders oder in einem separaten vorgeschalteten Prepolymeraggregat, z.B. einem Statikmischer-Reaktor, z.B. Sulzer-Mischer, hergestellt werden. Die Schichten c) und d) können gleiche oder verschiedene der vorstehend beschriebenen TPU-Komponenten umfassen, vorzugsweise sind diese TPU-Komponenten gleich.

Die erfindungsgemäßen TPU-Schichten c) und/oder d) des erfindungsgemäßen Laminats können dadurch hergestellt werden, dass die erfindungsgemäßen TPU-Granulate in einem Aufschmelzextruder aufgeschmolzen und über eine Düse zu einer Folie in einer Dicke von ≥ 5 µm bis ≤ 150 µm, vorzugsweise von ≥ 10 µm bis ≤ 120 µm, besonders bevorzugt von ≥ 15 µm bis ≤ 110 µm extrudiert werden.

Die Herstellung der Schichten b), c) und/oder d) kann nach den dem Fachmann bekannten Schmelzextrusionsverfahren, dem Blasextrusionsverfahren und/oder dem Cast-Extrusionsverfahren hergestellt werden. Hierzu werden die entsprechenden vorstehend beschriebenen TPU-Granulate der einzelnen Schichten in einem Aufschmelzextruder aufgeschmolzen und über eine Düse zu einer Folie in entsprechenden Schichtdicken extrudiert werden.

Im erfindungsgemäße Laminat können die Schichten b), gegebenenfalls c) und gegebenenfalls d) vor der Lamination insgesamt eine Schichtdicke von ≥ 100 bis ≤ 1200 µm, vorzugsweise von ≥ 300 bis ≤ 800 µm, besonders bevorzugt von ≥ 350 bis ≤ 550 µm, aufweisen. Insbesondere kann die Dicke der Schicht b) so gewählt werden, dass diese Schicht b) das Bauteil und/oder die Funktionseinheit (A) vollständig umhüllt.

Vorzugsweise ist das wenigstens eine TPU in den Schichten b), c) und/oder d) gleich.

Das Laminat kann eine oder mehrere weitere Schichten e) eines thermoplastischen und/oder duroplastischen Kunststoffs, vorzugsweise thermoplastischer Kunststoff, enthalten. Als thermoplastischer und/oder duroplastischer Kunststoff wird auf die unter der Schicht a) genannten Materialien, Ausführungsformen und Vorzugsbereiche verwiesen.

Diese weiteren Schichten e) können auf beiden Seiten des erfindungsgemäßen vorstehend beschriebenen Laminats platziert sein. Folgende Schichtabfolgen können möglich sein:
e) - a) -b)
a) - b) - e)
e) - a) - b) - e)
e) - a) - b) - c)
e) - a) -c)- b)
e) - a) - b) - c) - e)
e) - a) -c)- b) - e)
a) - b) -c) - e)
a) -c) - b) -e)
e) - a) - d) - b) - c)
e) - a) - c) - b) - d)
e) - a) - d) - b) - c) - e)
e) - a) - c) - b) - d) - e)
a) - d) - b) - c) - e)
a) - c) - b) - d) - e)

Weiterer Gegenstand der Erfindung ist ein Verfahren zur Herstellung des erfindungsgemäßen Laminats, umfassend die Schritte
i) Bereitstellung einer Schicht a) enthaltend wenigstens einen thermoplastischen und/oder duroplastischen Kunststoff, vorzugsweise einen thermoplastischen Kunststoff,
ii) Platzierung mindestens eines Bauteils und/oder Funktionseinheit (A) auf der Oberfläche der Schicht a),
iii) Platzierung mindestens einer Schicht b) enthaltend wenigstens ein thermoplastisches Polyurethan und welche zumindest bereichsweise als Schaumschicht ausgebildet ist, in einer Weise dass das wenigstens eine Bauteil und/oder eine Funktionseinheit (A) hiervon zumindest bereichsweise umgeben ist oder vollständig von der mindestens einen Schicht b) umhüllt ist, vorzugsweise vollständig umhüllt,
iv) Laminierung der Schichten aus den Schritten i) bis iii) bei einer Temperatur von ≥ 80°C bis ≤ 220 °C, vorzugsweise von ≥100°C bis ≤ 200°C , ganz besonders bevorzugt von ≥ 110°C bis ≤ 190°C und ein Druck von ≥ 2 N/cm² bis ≤ 400 N/cm² vorzugsweise von ≥ 5 N/cm² bis ≤ 350 N/cm², ganz besonders bevorzugt von ≥ 10 N/cm² bis ≤ 300 N/cm².

In einer ersten Ausführungsform des erfindungsgemäßen Verfahrens wird eine oder mehrere weitere Schichten c), umfassend wenigstens ein thermoplastisches Polyurethan mit einer Gesamtschichtdicke der einen oder mehreren Schichten c) von ≥ 5 µm bis ≤ 150 µm, vorzugsweise von ≥ 10 µm bis ≤ 120 µm, besonders bevorzugt von ≥ 15 µm bis ≤ 110 µm, in einer Weise platziert, dass diese eine oder mehrere weitere Schichten c) entweder vor Schritt iii) oder nach Schritt iii) auf die Oberfläche der Schichtabfolge abgelegt wird, vorzugsweise sind die Schichten in der unmittelbaren Reihenfolge a) b) c) oder a) c) b) angeordnet.

In einer bevorzugten Ausführungsform der ersten Ausführungsform werden die Schichten b) und c) in Form einer zweischichtigen Folie eingesetzt.

In einer zweiten Ausführungsform des erfindungsgemäßen Verfahrens kann neben der weiteren Schicht c) eine oder mehrere weitere Schichten d), umfassend wenigstens ein thermoplastisches Polyurethan mit einer Gesamtschichtdicke von ≥ 5 µm bis ≤ 150 µm, vorzugsweise von ≥ 10 µm bis ≤ 120 µm, besonders bevorzugt von ≥ 15 µm bis ≤ 110 µm, in einer Weise platziert werden, dass zwischen der einen oder mehreren weiteren Schichten d) und der einen oder mehreren weiteren Schichten c) immer Schicht b) liegt, vorzugsweise sind die Schichten in der unmittelbaren Reihenfolge a) c) b) d) oder a) d) b) c) angeordnet.

In einer bevorzugten Ausführungsform der zweiten Ausführungsform werden die Schichten b), c) und d) in Form einer mehrschichtigen Folie eingesetzt, wobei die Schicht b) die mittlere Schicht dieser mehrschichtigen Folie darstellt, vorzugsweise weist diese mehrschichtige Folie die Reihenfolge c) b) d) oder d) b) c) auf.

In einer weiteren Ausführungsform des erfindungsgemäßen Verfahrens können eine oder mehrere weitere Schichten e) umfassend wenigstens einen thermoplastischen und/oder duroplastischen Kunststoff, vorzugsweise thermoplastischen Kunststoff, vor Schritt i) und/oder nach Schritt iii) in einer Weise platziert werden, dass diese eine oder mehreren weiteren Schichten e) auf zumindest einem Teil der Oberfläche der entsprechenden Schichten aus den Schritten i) und/oder iii) abgelegt werden. Eine weitere Schicht e) kann auch in den vorstehenden ersten und/oder zweiten Ausführungsformen, sowie deren bevorzugten Ausführungsformen enthalten sein.

Für die einzelnen Schichten a), b), c), d) und/oder e) wird auf die vorstehenden beschriebenen Materialien, Ausführungsformen und Anordnungen verwiesen.

Das erfindungsgemäße Laminat kann in verschiedene Anwendungen gehen, wie beispielsweise Sicherheitsdokumente, insbesondere Identifikationskarten, Chipkarten, auch "Smart-Cards" genannt. Weiterhin können die erfindungsgemäßen Laminate Einsatz in elektronischen Waren des alltäglichen Gebrauchs finden. Diese sind beispielsweise dünne flächige Gebilde, welche sensible elektronische Bauteile beherbergen,wie beispielsweise Etiketten mit eingebauten Near Field Communication (NFC)-Modulen, besonders dünne und flexible Mobiltelefone, Smartwatches, flexible Displays, flexible Solarmodule, flexible Batterien.

Weiterer Gegenstand der Erfindung sind daher Sicherheitsdokumente, Chipkarten, Smartphones, Tablets, Displays für Smartphones und/oder Displays für Tablets umfassend wenigstens ein erfindungsgemäßes Laminat.

### Beispiele

### Beispiel 1: Herstellung einer thermoplastischen Mehrschichtschaumfolie der Schichtfolge c)b)c)

Es wurde eine mehrschichtige thermoplastische Polyurethan-Folie mit einer Dicke von 600 µm im Blasfolienverfahren hergestellt. Die Folie bestand aus drei Schichten: die beiden Außenlangen c) jeweils aus 100 µm kompaktem thermoplastischen Polyurethan und die 400 µm dicke Mittelschicht b) aus geschäumtem thermoplastischem Polyurethan. Als thermoplastisches Polyurethan wurde ein TPU auf Basis Polytetrahydrofuran (Molekulargewicht 2000), 4,4'-Methylendiphenylendiisocyanat und 1,4-Butandiol als Kettenverlängerer mit einer Shore-A-Härte 87, gemessen nach DIN ISO 7619-1, entsprechend einer Härte von 36 Shore-D gemessen nach DIN ISO 7619-1, einer Dichte von 1,12 g/cm³ gemessen nach DIN EN ISO 1183-1A und einem Schmelzflussindex (MFI) von 30 g/10 min gemessen bei 190°C/21,6 kg (DIN ISO 1133) verwendet. Für das Schäumen der Mittelschicht wurden dem TPU 5 Gew.-% Hydrocerol™ CF20 der Firma Clariant eingesetzt, welches bei der Erhitzung im Extruder der Folie CO₂ freisetzt und somit das TPU beim Austritt aus der Düse aufschäumt. Diese Schaumfolie wies eine Dicke von 600 µm auf.

### Beispiel 2: Herstellung des Folienstapels für das erfindungsgemäße Laminat

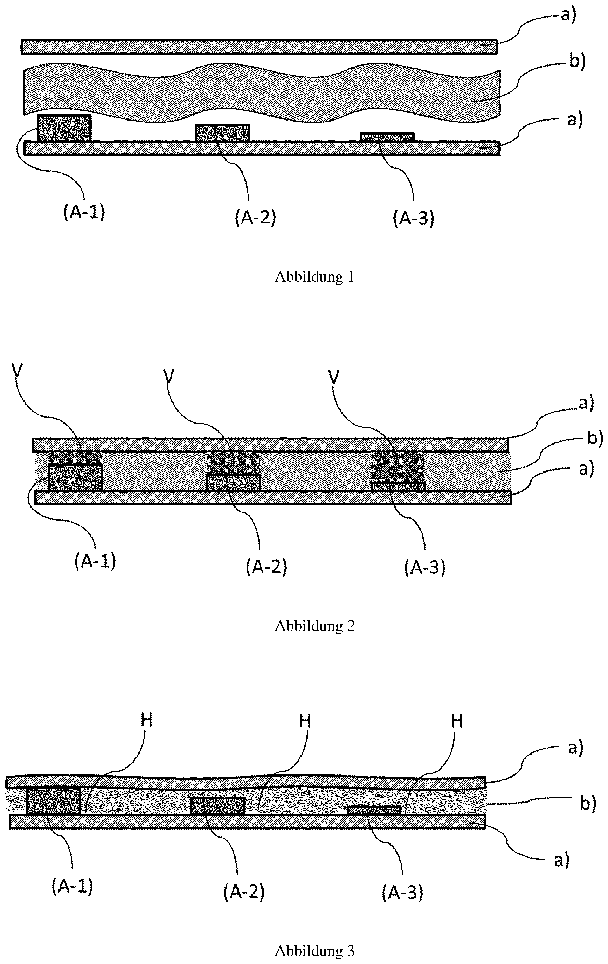

Abbildung 1 zeigt schematisch die Abfolge der Schichten des Folienstapels von Beispiel 2. Auf einer Folie aus Polycarbonat Makrolon™ 3108 der Dicke 100 µm (in Abbildung 1 als a) bezeichnet) wurden im Abstand von 30 mm drei hochtemperaturbeständige Kunststoffbauteile jeweils einer Dicke von 100 µm (in Abbildung 1 als (A-3) bezeichnet), 200 µm (in Abbildung 1 als (A-2) bezeichnet) und 300 µm (in Abbildung 1 als (A-1) bezeichnet) platziert.

Die Schaumfolie aus Beispiel 1 (in Abbildung 1 als b) bezeichnet) wurde über diese Polycarbonatfolie mit den Bauteilen platziert.

Über die Schaumfolie wurde eine weitere Folie aus Polycarbonat Makrolon™ 3108 der Dicke 100 µm platziert (in Abbildung 1 als a) bezeichnet).

### Beispiel 3: Herstellung des Laminats

Der Folienstapel aus Beispiel 2 wurde auf einer Laminationspresse der Firma Bürkle mit folgenden Parametern laminiert:
Vorheizen der Presse auf 175°C
Pressen für 3 Minuten bei einem Druck von 50 N/cm²
Abkühlen der Presse auf 38°C und öffnen der Presse.

Das Laminat zeigte ein homogenes Einbetten der Bauteile in allen Höhen, 100 µm, 200 µm und 300 µm, ohne Störungen im Fließverlauf (Schematische Ansicht in Abbildung 2). Direkt über den Bauteilen wurde der Schaum stärker verdichtet. Die Oberfläche des Laminats war eben. In Abbildung 2 bedeutet V verdichteter Schaum.

### Vergleichsbeispiel 4:

Es wurde ein Folienstapel gemäß Beispiel 2 hergestellt, jedoch wurde die Folie gemäß Beispiel 1 (Schicht b) der Abbildung 1) durch eine durch Blasfolienextrusion hergestellte thermoplastische Polyurethan-Folie der Dicke von 640 µm ersetzt. Als thermoplastisches Polyurethan wurde ein TPU auf Basis Polytetrahydrofuran (Molekulargewicht 2000), 4,4'-Methylendiphenylendiisocyanat und 1,4-Butandiol als Kettenverlängerer mit einer Shore A-Härte 87, gemessen nach DIN ISO 7619-1, entsprechend einer Härte von 36 Shore D gemessen nach DIN ISO 7619-1, einer Dichte gemessen nach DIN EN ISO 1183-1A von 1,12 g/cm³ und einem Schmelzflussindex (MFI) von 30 g/10 min gemessen bei 190°C/21,6 kg (gemäß DIN ISO 1133) eingesetzt.

Der Folienstapel des Vergleichsbeispiels 4 wurde gemäß Beispiel 3 laminert.

Das Laminat aus Vergleichsbeispiel 4 zeigte ein inhomogenes Einbetten der Bauteile in allen Höhen, 100, 200 und 300 µm mit Störungen im Fließverlauf (Schematische Ansicht in Abbildung 3). Das Laminat des Vergleichsbeispiels 4 zeigte keine ebene Oberfläche und weiterhin sind Hohlräume in Nachbarschaft zu den Bauteilen A-1, A-2 und A-3 erkennbar. In Abbildung 3 bedeutet H Hohlraum.

Die Beispiele 3 und Vergleichsbeispiel 4 zeigen deutlich, dass bei im erfindungsgemäßen Laminat die Bauteile ohne Störungen im Laminat eingebettet werden konnten. Weiterhin wurden die Bauteile fest im erfindungsgemäßen Laminat verbunden, ohne dass beim Laminervorgang Beschädigungen der Bauteile erfolgten. Die Oberfläche der erfindungsgemäßen Laminate ist eben, wohingegen die Oberfläche des Vergleichslaminats eine gewellte Struktur aufwies.

Bezugszeichen der Abbildungen 1 bis 3:
(A-1) hochtemperaturbsetändiges Kunststoffbauteil der Dicke 300 µm
(A-2) hochtemperaturbsetändiges Kunststoffbauteil der Dicke 200 µm
(A-3) hochtemperaturbsetändiges Kunststoffbauteil der Dicke 100 µm
   a) Folie aus Polycarbonat Makrolon™ 3108 der Dicke 100 µm
   b) Folie aus Beispiel 1 bzw. Folie aus Vergleichsbeispiel 4
H) Hohlraum
V) Verdichteter Schaum

## Patentansprüche

1. Laminat umfassend
• mindestens eine Schicht a) enthaltend wenigstens einen thermoplastischen und/oder duroplastischen Kunststoff,
• mindestens eine Schicht b) enthaltend wenigstens ein thermoplastisches Polyurethan,
wobei mindestens ein Bauteil und/oder eine Funktionseinheit (A) auf der mindestens einen Schicht a) positioniert ist, und
wobei das wenigstens eine thermoplastische Polyurethan der Schicht b) zumindest bereichsweise als Schaumschicht ausgebildet ist.

2. Laminat gemäß Anspruch 1, wobei das Bauteil und/oder die Funktionseinheit (A) zumindest bereichsweise von der mindestens einen Schicht b) umgeben ist, oder vollständig von der mindestens einen Schicht b) umhüllt ist.

3. Laminat gemäß Anspruch 1 oder 2, wobei das wenigstens eine thermoplastische Polyurethan der Schicht b) eine Härte von ≥ 60 Shore A gemäß DIN ISO 7619-1 bis ≤ 60 Shore D gemäß DIN ISO 7619-1 aufweist.

4. Laminat gemäß Anspruch 1 oder 2, wobei eine oder mehrere weitere Schichten c) umfassend wenigstens ein thermoplastisches Polyurethan mit einer Gesamtschichtdicke der einen oder mehreren Schichten c) von ≥ 5 µm bis ≤ 150 µm und wobei die eine oder mehreren Schichten c) so angeordnet ist, dass die Schichten die unmittelbare Reihenfolge a) c) b) oder a) b) c) bilden.

5. Laminat gemäß Anspruch 4, wobei eine oder mehrere weitere Schichten d) umfassend wenigstens ein thermoplastisches Polyurethan mit einer Gesamtschichtdicke der einen oder mehreren Schichten d) von ≥ 5 µm bis ≤ 150 µm in einer Weise im Laminat angeordnet ist, dass zwischen der mindestens einen weiteren Schicht d) und der mindestens einen weiteren Schicht c) immer die Schicht b) liegt.

6. Laminat gemäß Anspruch 4 bis 5, wobei das wenigstens eine thermoplastisches Polyurethan der einen oder mehreren weiteren Schichten c) und/oder der einen oder mehreren weiteren Schichten d) jeweils eine Härte von ≥ 60 Shore A gemäß DIN ISO 7619-1 bis ≤ 60 Shore D gemäß DIN ISO 7619-1aufweisen.

7. Laminat gemäß Anspruch 1 bis 5, wobei die wenigstens eine Schicht a) wenigstens einen thermoplastischen Kunststoff ausgewählt aus der Gruppe von ein oder mehrere Polycarbonat(e) oder Copolycarbonat(e) auf Basis von Diphenolen, Poly- oder Copolyacrylate, Poly- oder Copolymethacrylat(e), Poly- oder Copolymer(e) mit Styrol, Acrylnitril-Butadien-Styrol, oder Polystyrolacrylnitril, thermoplastische Polyurethan(e), Polyolefin(e), Poly- oder Copolykondensat(e) einer aromatischen Dicarbonsäure und aliphatischen, cycloaliphatischen und/oder araliphatischen Diolen mit 2 bis 16 Kohlenstoffatomen, Polyamid, Poly- oder Copolykondensat(e) wenigstens einer Cycloalkyldicarbonsäure, Polysulfone, Polyvinylhalogenide oder deren Mischungen oder Blends aus mindestens zwei der vorangehend genannten.

8. Laminat gemäß Anspruch 1 bis 7, wobei die Schichten b), gegebenenfalls c) und gegebenenfalls d) vor der Lamination insgesamt eine Dicke von ≥ 100 bis ≤ 1200 µm aufweisen.

9. Verfahren zur Herstellung eines Laminats gemäß Anspruch 1 bis 8, umfassend die Schritte
i) Bereitstellung einer Schicht a) enthaltend wenigstens einen thermoplastischen und/oder duroplastischen Kunststoff,
ii) Platzierung mindestens eines Bauteils und/oder Funktionseinheit (A) auf der Oberfläche der Schicht a),
iii) Platzierung mindestens einer Schicht b) enthaltend wenigstens ein thermoplastisches Polyurethan und welche zumindest bereichsweise als Schaumschicht ausgebildet ist, in einer Weise dass das wenigstens eine Bauteil und/oder eine Funktionseinheit (A) hiervon zumindest bereichsweise umgeben ist oder vollständig von der mindestens einen Schicht b) umhüllt ist,
iv) Laminierung der Schichten aus den Schritten i) bis iii) bei einer Temperatur von ≥ 80 °C bis ≤ 220 °C und einem Druck von ≥ 2 N/cm² bis ≤ 400 N/cm².

10. Verfahren gemäß Anspruch 9, wobei eine oder mehrere weitere Schichten c), umfassend wenigstens ein thermoplastisches Polyurethan mit einer Gesamtschichtdicke der einen oder mehreren Schichten c) von ≥ 5 µm bis ≤ 150 µm in einer Weise platziert wird, dass diese eine oder mehrere weitere Schichten c) entweder vor Schritt iii) oder nach Schritt iii) auf die Oberfläche der Schichtabfolge abgelegt wird, vorzugsweise sind die Schichten in der unmittelbaren Reihenfolge a) b) c) oder a) c) b) angeordnet.

11. Verfahren gemäß Anspruch 10, wobei eine oder mehrere weitere Schichten d), umfassend wenigstens ein thermoplastisches Polyurethan mit einer Gesamtschichtdicke der einen oder mehreren Schichten c) von ≥ 5 µm bis ≤ 150 µm, in einer Weise platziert wird, dass zwischen der einen oder mehreren weiteren Schichten d) und der einen oder mehreren weiteren Schichten c) immer Schicht b) liegt, vorzugsweise sind die Schichten in der unmittelbaren Reihenfolge a) c) b) d) oder a) d) b) c) angeordnet.

12. Verfahren gemäß Anspruch 10, wobei die Schichten b) und c) in Form einer mehrschichtigen thermoplastischen Polyurethanfolie vorliegen und in Schritt iii) entsprechend platziert werden, vorzugsweise sind die Schichten in der unmittelbaren Reihenfolge a) b) c) oder a) c) b) angeordnet.

13. Verfahren gemäß Anspruch 11, wobei die Schichten b), c) und d) in Form einer mehrschichtigen thermoplastischen Polyurethanfolie vorliegen und in Schritt iii) entsprechend platziert werden, vorzugsweise sind die Schichten in der unmittelbaren Reihenfolge a) c) b) d) oder a) d) b) c) angeordnet.

14. Verfahren gemäß Anspruch 9 bis 13, wobei eine oder mehrere weitere Schichten e) umfassend wenigstens ein thermoplastischen und/oder duroplastischen Kunststoff vor Schritt i) und/oder nach Schritt iii) in einer Weise platziert werden, dass diese eine oder mehreren weiteren Schichten e) auf zumindest einem Teil der Oberfläche der entsprechenden Schichten aus den Schritten i) und/oder iii) abgelegt werden.

15. Sicherheitsdokumente, Chipkarten, Smartphones, Tablets, Displays für Smartphones und/oder Displays für Tablets umfassend wenigstens ein Laminat gemäß einem der Ansprüche 1 bis 8.
